# DEMANDE DE BREVET EUROPEEN

(11) **EP 0 849 618 A1**
(43) Date de publication de la demande: **24.06.1998**
(21) Numéro de dépôt: 97402972.0
(22) Date de dépôt: 09.12.1997
(51) Int. Cl.: G02B 26/10, G02B 5/08

(54) **Système optique d'observation comportant un miroir incliné biface de pointage/balayage**

(30) Priorité: 19.12.1996 FR 9615647
(71) Demandeur: AEROSPATIALE Société Nationale Industrielle, 75781 Paris Cédex 16 (FR)
(72) Inventeur: Delclaud, Yves, 83440 Callian (FR); Cerutti-Maori, Guy, 06150 Cannes-La-Bocca (FR)
(74) Mandataire: Rinuy, Santarelli

(57) **Abrégé**

Un système optique pour l'observation d'un objet selon une pluralité d'axes de visée, comportant un instrument optique ayant un axe optique et un miroir rotatif adapté à intercepter un faisceau émis ou reçu par l'instrument selon cet axe optique, ce miroir rotatif ayant un axe de rotation et comportant deux surfaces réfléchissantes disposées dos à dos en étant au mois approximativement prependiculaires à un même plan contenant l'axe de rotation, l'une au moins des surfaces réfléchissantes ayant une inclinaison non nulle par rapport à cet axe de rotation, le système optique ayant des axes de visée différents selon que l'axe optique de l'instrument optique intercepte l'une ou l'autre des surfaces réfléchissantes.

## Description

L'invention concerne un système optique pour l'observation d'un objet à imager, de manière à pouvoir notamment en réaliser des couples stéréoscopiques d'images.

Elle s'applique tout particulièrement, mais non exclusivement, au cas de plates-formes d'observation comportant un instrument optique et embarquées sur des avions ou des satellites défilant le long d'une trajectoire ou orbite au-dessus de zones à observer.

L'instrument optique peut avoir un champ de vue bidirectionnel, auquel cas l'observation consiste à saisir des images différentes à des instants successifs. A cet effet l'instrument optique comporte par exemple, dans son plan focal, un réseau matriciel de capteurs optiques, par exemple de type CCD.

Il peut toutefois être tiré profit du mouvement de défilement de la plate-forme en constituant des images par saisies successives rapprochées d'images unidimensionnelles transversales à la direction de défilement. L'instrument optique peut alors n'avoir qu'un champ de vue instantané à une seule dimension, transversal à cette direction de défilement. Cet instrument optique (on dit parfois qu'il est du type "push-broom") comporte typiquement un réseau linéaire de capteurs, par exemple une barrette CCD. Ce réseau linéaire de capteurs définit une dimension de l'image, tandis que le défilement de la plate-forme définit l'autre dimension.

L'instrument optique peut même ne comporter qu'un seul capteur optique. Comme précédemment, l'une des dimensions de l'image (dimension longitudinale) est définie par la direction de défilement de la plate-forme. Par contre, l'obtention de l'autre dimension de l'image (dimension transversale) nécessite un mouvement latéral de pivotement de l'axe de visée de l'instrument optique ; l'instrument optique est de préférence fixe au cours de la prise d'image, et le mouvement latéral de pivotement est en pratique obtenu grâce à un miroir de balayage placé entre l'instrument optique et la zone de sol, en étant capable de pivoter le plus souvent autour d'un axe de rotation sensiblement parallèle à la direction de défilement.

Quel que soit l'instrument optique utilisé il est souvent nécessaire, notamment lorsque le champ de vue de l'instrument optique est faible (en pratique, le champ de vue d'un instrument optique est d'autant plus faible que sa résolution est élevée), de pouvoir saisir des images suivant une pluralité de directions d'observation, latéralement à droite ou à gauche par rapport à la direction de défilement. Il en résulte une capacité de mobilité latérale de l'axe de visée de l'instrument optique, dont on dit parfois qu'elle augmente l'"accessibilité" de l'instrument optique.

Plutôt que de déplacer l'instrument optique lui-même, il est souvent préféré de disposer un système optique mobile de pointage, par exemple un miroir mobile, entre l'instrument optique et l'objet à imager. Ce système optique de pointage peut inclure le miroir de balayage d'un instrument optique à un seul capteur, ou au contraire s'ajouter à celui-ci.

Par ailleurs, certaines missions d'observation peuvent nécessiter de pouvoir prendre des images de l'objet considéré suivant plusieurs directions angulaires différentes par rapport à la verticale locale, ou "nadir". C'est notamment le cas des applications suivantes :
- analyse angulaire bidimensionnelle d'un objet, par exemple pour sa caractérisation thermo-optique,
- analyse stéréoscopique d'un objet.

La première application nécessite en pratique la saisie d'image de l'objet suivant une multitude de directions d'observation, correspondant à des valeurs angulaires différentes en azimut et en élévation.

La deuxième application peut toutefois se contenter, théoriquement, d'un seul couple d'images prises suivant deux directions angulaires différentes.

Dans tous les cas, et en particulier pour des applications où le miroir atteint un diamètre important, typiquement supérieur à 30 cm, la mise en place de deux mouvements de rotation paraît a priori rédhibitoire (notamment des points de vue fiabilité, poids, encombrement qui sont des paramètres critiques dans les applications spatiales).

En fait, si l'on approfondit l'analyse des besoins, on constate que pour certaines applications de type stéréoscopique, seules deux directions angulaires constantes sont nécessaires (un couple d'images stéréoscopiques est généralement considéré comme optimal lorsque l'écart angulaire entre les deux observations successives est compris entre 35 et 45° environ). Ce couple peut être constitué par deux prises de vue latérales acquises au cours d'orbites différentes et de ce fait séparées par un temps lié à l'orbitographie. Ce principe présente des insuffisances d'un point de vue opérationnel ce qui fait qu'il rend difficile d'obtenir avec lui des couples interprétables. Il a par contre été montré que l'acquisition d'un tel couple d'images au cours d'un même passage orbital est bien plus efficace.

Une telle double acquisition d'images lors d'un même passage nécessite, en plus de la mobilité latérale requise pour l'accessibilité de l'instrument une capacité d'observation vers l'avant et vers l'arrière. Une même zone est ainsi imagée selon la visée avant puis très peu de temps après selon une visée arrière. Les deux observations peuvent être centrées sur la trace au sol du mouvement de défilement, les visées "avant" et "arrière" étant alors symétriques.

Une telle double acquisition d'image est généralement obtenue par mise en oeuvre, sur une même plate-forme d'observation, aéroportée ou spatiale, de deux systèmes constitués chacun d'un instrument optique et d'un miroir pivotant dont le plan pivote autour d'un axe de ce plan qui est au moins approximativement perpendiculaire à l'axe de visée de l'instrument optique pris isolément. Chaque système prend une image de l'objet. Cette solution a toutefois l'inconvénient de conduire à des problèmes de poids et d'encombrement.

On pourrait imaginer, comme précédemment, la combinaison d'un instrument optique et d'un dispositif optique réfléchissant à deux degrés de liberté ; ce dernier peut être soit constitué d'un miroir par un mécanisme de type CARDAN, soit constitué d'une série de deux miroirs montés pivotants autour d'axes différents. De telles solutions, compte tenu notamment des niveaux requis de performance, paraissent toutefois conduire encore à des problèmes rédhibitoires de poids et d'encombrement.

L'invention a pour objet de pallier les inconvénients précités grâce à la mise en oeuvre, en aval d'un instrument optique, d'un miroir unique, mobile en pivotement/rotation autour d'un axe unique, capable de foumir à l'instrument optique de l'information suivant deux directions de visée décalées angulairement parallèlement à l'axe de rotation tout en ayant la mobilité latérale requise pour un mouvement de pointage (changement de direction entre deux saisies d'images) et/ou de balayage (mouvement continu au cours de la saisie d'une image)

L'invention propose à cet effet un système optique pour l'observation d'un objet selon une pluralité d'axes de visée, comportant un instrument optique ayant un axe optique et un miroir pivotant adapté à intercepter cet axe optique, ce miroir de balayage ayant un axe de rotation et comportant deux surfaces réfléchissantes disposées dos à dos en étant au moins approximativement perpendiculaires à un même plan contenant l'axe de rotation, l'une au moins des surfaces réfléchissantes ayant une inclinaison non nulle par rapport à cet axe de rotation, le système optique ayant des axes de visée différents selon que l'axe optique intercepte l'une ou l'autre des surfaces réfléchissantes.

L'invention propose également un système d'observation à balayage comportant une plate-forme mobile parallèlement à un objet à imager suivant une direction de défilement, cette plate-forme portant un système optique d'observation du type précité, l'axe de rotation du miroir étant parallèle à la direction de défilement.

L'invention est fondée sur l'utilisation d'un miroir ayant deux faces réfléchissantes disposées dos à dos, et la création d'une inclinaison entre l'axe de rotation du miroir et le plan de celui-ci. La rotation du miroir autour de son axe provoque le pointage ou le balayage requis. La présence de deux faces réfléchissantes garantit, lors de ce pointage/balayage, que deux directions différentes de visée, décalées angulairement parallèlement à l'axe de rotation, peuvent être obtenues, alternativement. Lorsque le miroir fait partie d'un système optique embarqué, et que son axe de rotation est parallèle à la direction du défilement, selon que c'est une face ou l'autre du miroir qui réfléchit le signal (avec un écart angulaire de 180°), on comprend qu'il peut y avoir en alternance une visée soit vers l'avant soit vers l'arrière.

De manière préférée l'invention tire profit de ce qu'il est possible de réaliser sur un miroir deux faces réfléchissantes dos à dos de qualité optique tout à fait satisfaisante. Les technologies de type sandwich-carbone ou carbure de silicium sont tout à fait appropriées à cet effet.

Selon des dispositions préférées de l'invention éventuellement combinées :
- lesdites surfaces réfléchissantes sont parallèles l'une à l'autre,
- les deux surfaces réfléchissantes sont deux faces d'une même plaque,
- chacune desdites surfaces réfléchissantes est au moins approximativement symétrique par rapport audit plan contenant l'axe de rotation,
- lesdites surfaces réfléchissantes ont des inclinaisons différentes par rapport à l'axe de rotation,
- un miroir de renvoi intercepte cet axe optique et le renvoie selon une direction qui intercepte au moins approximativement l'axe de rotation,
- ladite direction est sensiblement perpendiculaire à l'axe de rotation,
- cet axe optique est au moins approximativement contenu dans un plan contenant l'axe de rotation,
- cet axe de visée intercepte au moins approximativement l'axe de rotation,
- cet axe optique est au moins approximativement perpendiculaire à l'axe de rotation,
- un miroir de renvoi intercepte cet axe optique et le renvoie vers l'axe de rotation sensiblement à l'opposé de l'objet à imager,
- cet axe optique intercepte au moins approximativement l'axe de rotation, l'instrument optique étant situé à l'écart transversalement par rapport à un plan contenant l'axe de rotation et une direction destinée à s'étendre depuis la plate-forme vers l'objet à imager,
- la plate-forme est embarquée sur un véhicule aérien ou spatial et l'objet à imager est une zone de sol.

Des objets, caractéristiques et avantages de l'invention ressortent de la description qui suit, donnée à titre d'exemple non limitatif, en regard des dessins annexés sur lesquels :
- la figure 1 est une vue schématique en perspective d'un miroir de pointage/balayage conforme à l'invention,
- la figure 2 en est une vue en coupe axiale, dans un plan perpendiculaire au plan des surfaces réfléchissantes,
- la figure 3 est une vue en coupe axiale d'un miroir conforme à l'invention mais dont les surfaces réfléchissantes présentent des inclinaisons différentes par rapport à l'axe de rotation,
- la figure 4 est une vue schématique d'un système optique conforme à l'invention, dans une première configuration relative entre instrument optique et miroir de pointage/balayage,
- la figure 5 est une vue schématique montrant la trace au sol des axes de visée avant et arrière,
- la figure 6 est un graphique montrant la trace du mouvement relatif de l'axe de visée par rapport à la verticale locale au cours d'un balayage avant,
- la figure 7A est une vue schématique en perspective d'un autre système optique conforme à l'invention dans une configuration où l'axe optique de l'instrument optique est disposé transversalement à la direction de défilement,
- la figure 7B est une vue en perspective similaire à celle de la figure 7A à ceci près que le miroir a tourné de 180° autour de son axe,
- la figure 8 est un graphique similaire à celui de la figure 6, mais correspondant à la configuration des figures 7A et 7B, et ce au cours d'un balayage arrière.

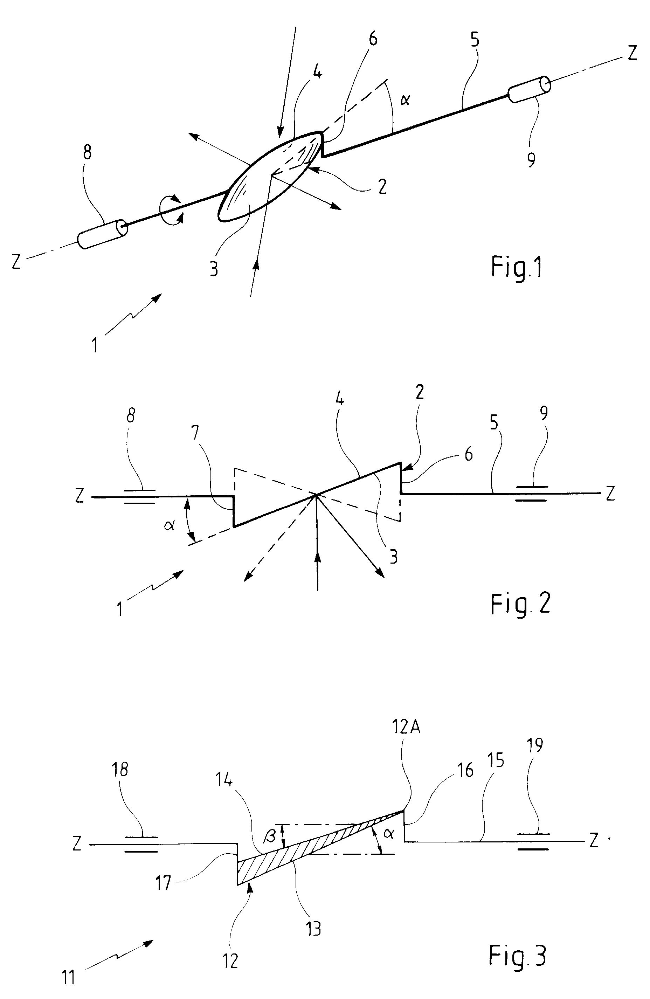

Les figures 1 et 2 représentent un miroir mobile conforme à l'invention, pouvant intervenir en pointage et/ou en balayage.

Ce miroir, représenté sous la référence générale 1, comporte un élément 2 mobile en rotation autour d'un axe Z-Z. Cet élément mobile 2 comporte deux surfaces réfléchissantes 3 et 4. Chacune de ces surfaces 3 et 4 présente ici une inclinaison non nulle α par rapport à l'axe de rotation Z-Z. Dans l'exemple des figures 1 et 2 les deux faces réfléchissantes 3 et 4 sont parallèles de sorte qu'un même angle α permet de définir l'inclinaison de ces surfaces 3 et 4 par rapport à l'axe Z-Z.

L'équipement mobile 2 comporte ici, en plus du miroir à deux faces réfléchissantes, un arbre 5 auquel le miroir est fixé par deux bras 6 et 7. De préférence, pour garantir un dégagement optimum des surfaces réfléchissantes, ces bras de liaison sont disposés à la périphérie du miroir.

Ce miroir est commandé en rotation par un moteur rotatif de tout type connu approprié, ici repéré 8, qui sert également de palier pour l'arbre 5. Dans l'exemple des figures 1 et 2, un deuxième palier 9 est prévu, à l'opposé du moteur-palier 8 par rapport au miroir 2.

A la figure 1, deux rayons lumineux sensiblement colinéaires de sens opposés sont représentés, qui se réfléchissent chacun sur les deux faces opposées du miroir.

Sur la figure 2, on comprend qu'un même faisceau lumineux, venant ici du bas de cette figure 2, va se réfléchir dans des directions différentes selon qu'il est intercepté par la face 3 (rayon réfléchi tracé en trait plein) ou par la face 4 (rayon réfléchi représenté en tireté).

Il faut une rotation de 180° du miroir autour de son axe de rotation pour faire passer ce miroir de la configuration représentée en trait plein à la configuration représentée en tireté. On comprend néanmoins qu'au cours de la rotation de ce miroir chacune des deux surfaces réfléchissantes va alternativement permettre un pointage ou un balayage dans des zones angulaires différentes, ici à droite ou à gauche du faisceau incident.

La figure 3 représente une variante de réalisation de l'invention. Le miroir rotatif qui y est représenté sous la référence générale 11 comporte, à la différence du miroir des figures 1 et 2, deux surfaces réfléchissantes 13 et 14 qui, au lieu d'être parallèles l'une à l'autre, ont des inclinaisons différentes α et β par rapport à l'axe de rotation. Plus précisément l'élément mobile 12 a ici une section en prisme dont l'arête, repérée sous la référence 2A, est perpendiculaire à l'axe de rotation Z-Z.

Dans cette exemple de la figure 3, chacune des inclinaisons α et β est non nulle. On comprend aisément toutefois que, en variante non représentée, l'une de ces inclinaisons α et β peut être nulle.

On peut ainsi définir, de façon très générale, les miroirs des figures 1 à 3 comme étant des miroirs comportant deux faces réfléchissantes disposées dos à dos, sensiblement perpendiculaires à un même plan contenant l'axe de rotation (il s'agit aux figures 2 et 3 du plan de la feuille), l'une au moins des surfaces réfléchissantes présentant une inclinaison non nulle par rapport à cet axe de rotation.

De manière préférée, chacune des deux surfaces réfléchissantes est au moins approximativement symétrique par rapport au plan précité auquel elles sont perpendiculaires. Ces surfaces réfléchissantes ont de préférence une forme circulaire, ou ovale, allongée transversalement à l'axe de rotation (ce qui correspond à l'intersection d'un faisceau à peu près cylindrique avec un plan.

De manière également préférée, les deux surfaces réfléchissantes sont ménagées sur les deux faces d'une même plaque (à faces parallèles voire légèrement inclinées), grâce à quoi l'écart entre les deux surfaces réfléchissantes peut être très faible.

A la figure 3, les éléments similaires à ceux des figures 1 et 2 sont désignés par des numéros de référence qui se déduisent de ceux de ces figures 1 et 2 par addition du chiffre 10.

Sur ces figures 1 à 3, l'arbre 5 est solidaire de l'élément mobile 2 ou 12. Bien entendu, en variante non représentée, l'arbre 5 peut être solidaire de la plate-forme, tandis que l'élément mobile est mobile en rotation par rapport à cet arbre. Cet arbre 5 n'a pas besoin d'être nécessairement matérialisé, du moment qu'un mouvement de rotation peut être communiqué à l'élément mobile, autour de l'axe géométrique Z-Z.

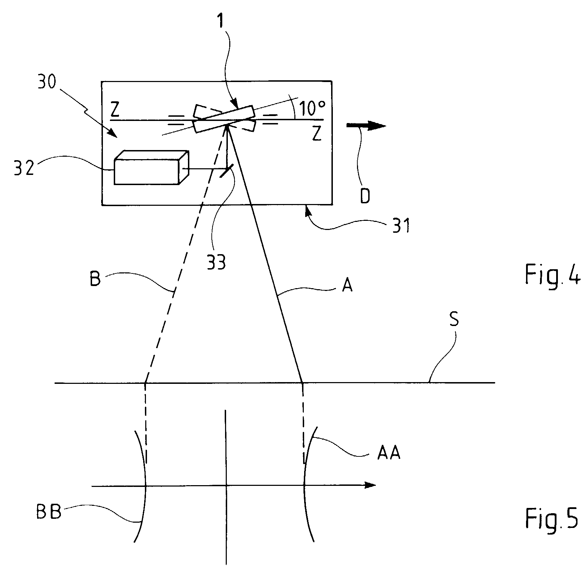

La figure 4 représente de façon schématique, en coupe verticale, un système optique désigné sous la référence générale 30, monté sur une plate-forme 31 en mouvement relatif par rapport à une zone de sol S selon une direction de défilement D, et comportant un miroir 1 conforme aux figures 1 et 2.

Ce système optique 30 comporte, en plus du miroir 1, un instrument optique 32 et un miroir de renvoi fixe 33. L'instrument optique 32 est adapté à émettre et recevoir un faisceau optique selon une direction donnée ; il est fixe par rapport à la plate-forme. Son axe optique est ici parallèle à la direction de défilement D. Le miroir de renvoi 33 a pour objet de renvoyer les faisceaux émis par l'instrument optique 32 selon une direction verticale vers le miroir 1, c'est-à-dire vers le haut, et à renvoyer vers cet instrument optique des faisceaux réfléchis par ce miroir 1 selon une direction verticale. En variante, l'axe optique peut avoir une orientation quelconque, par exemple perpendiculaire au plan de la figure 4, du moment que le miroir 33 peut le réfléchir verticalement vers le haut. Bien entendu, la direction verticale de renvoi de ce miroir 33 intercepte, au moins approximativement, l'axe géométrique de rotation du miroir 1.

Lorsque le miroir 1 est dans la configuration représentée en trait plein, c'est-à-dire incliné vers l'avant et vers le bas, l'axe de visée correspondant à l'ensemble du système optique 32+33+1 est dirigé vers le bas et vers l'avant ; il est désigné sous la référence A. Au cours d'un mouvement angulaire du miroir 1 sur une amplitude sensiblement inférieure à 180° (typiquement de -30° à +30° environ), cet axe de visée A intercepte au sol, dans un plan horizontal mobile en synchronisme avec la plate-forme 31, une trace qui est désignée sous la référence A-A à la figure 5.

Après un court instant pendant lequel le faisceau réfléchi par la première surface réfléchissante du miroir 1 quitte le sol, la rotation continue du miroir 1 a pour résultat que le faisceau renvoyé par le miroir 33 intercepte (ou provient de) l'autre face réfléchissante de ce miroir 1 (voir trace en pointillé sur cette figure 4).

On comprend aisément que l'ensemble optique constitué par l'instrument optique 32, le miroir 33 et cette seconde surface réfléchissante, a maintenant un axe de visée désigné par la lettre B qui est incliné vers le bas et vers l'arrière. La trace interceptée par le sol dans un repère mobile avec la plate-forme 31 est représentée à la figure 5 sous la référence B-B.

On peut remarquer que les traces A-A et B-B sont, à la figure 5, symétriques par rapport à la trace de la plate-forme elle-même, schématisées par un axe dirigé vers la droite. Cela résulte d'une symétrie du système optique par rapport à un plan vertical passant par l'axe de rotation du miroir 1.

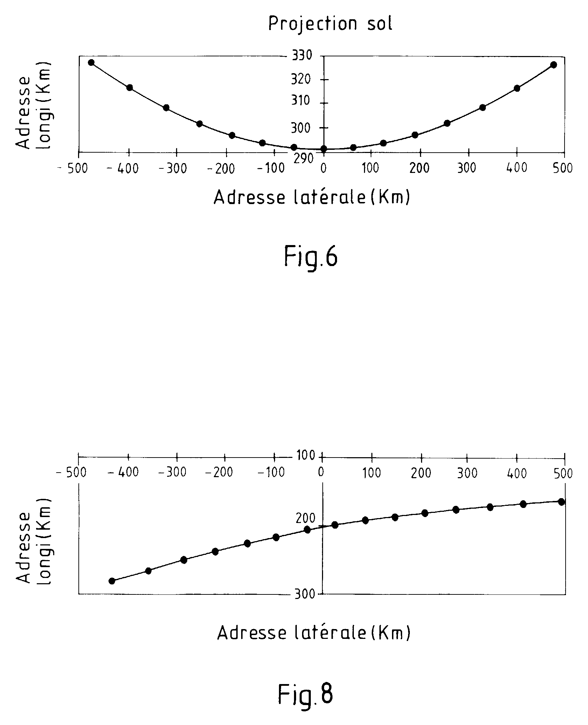

La figure 6 est un graphique représentant la trace A-A de la figure 5. En abscisse est indiquée l'adresse latérale, en kilomètres, de chaque point de la trace, tandis que l'ordonnée correspond à l'écart longitudinal, c'est-à-dire parallèlement à la direction de défilement, de chaque point de cette trace par rapport à la trace de l'axe de visée lorsque celui-ci est dans un plan vertical contenant l'axe de rotation du miroir. Ce graphique correspond à l'exemple d'un satellite circulant sur une orbite à environ 800 km d'altitude au-dessus d'une terre plate, pour une inclinaison à environ 10° des surfaces réfléchissantes par rapport à l'axe de rotation. En pratique, cette inclinaison est, de préférence, au plus égale à 30° environ.

On constate sur la figure 6 que les variations d'adresse longitudinale sont inférieures à 40 km (entre 290 et 320 km environ en avant de la trace centrale) lorsque l'axe de visée parcourt transversalement une distance d'environ 1000 km.

Dans l'exemple représenté, puisque le miroir utilisé est conforme aux figures 1 et 2, les inclinaisons des axes de visée avant et arrière sont sensiblement égales.

Bien entendu, en variante, on peut utiliser un miroir tel que le miroir 11 de la figure 3, lorsque les inclinaisons des axes de visée avant et arrière doivent être différentes. Dans le cas où l'une des deux visées doit être une visée restant dans un plan perpendiculaire à la direction de défilement, il suffit de modifier l'une des surfaces réfléchissantes de ce miroir 11, par exemple la surface 14, en sorte que celle-ci devienne parallèle à l'axe de rotation Z-Z. La trace correspondante dans le graphique de la figure 6 est une droite d'adresse longitudinale égale en tour point à 0.

La configuration des figures 4 et 5 suppose en outre que l'on puisse renvoyer l'axe optique de l'instrument optique vers le haut, parallèlement à la verticale locale. Cela suppose en pratique de pouvoir disposer l'instrument optique ou au moins un miroir de renvoi sous le plan horizontal dans lequel se situe l'axe de rotation du miroir.

Toutefois, pour des raisons d'encombrement ou de dégagement de champ de vue, cette configuration peut se révéler impossible à mettre en pratique. Il est alors préférable de faire en sorte que l'axe optique de l'instrument optique, de préférence (mais pas nécessairement) en l'absence de tout miroir de renvoi, soit disposé dans un plan perpendiculaire à la direction de défilement. On notera que le cas des figures 4 et 5 est un cas particulier de cette configuration générale.

En particulier, l'axe optique peut être disposé selon une orientation au moins approximativement horizontale.

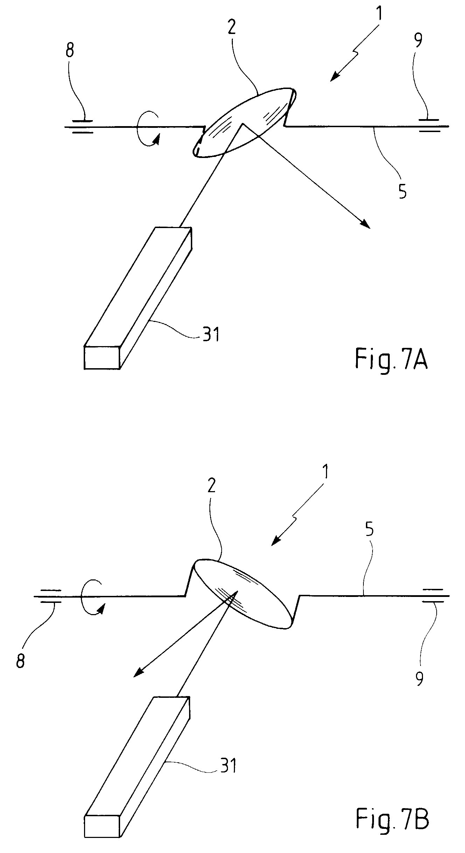

Les figures 7A et 7B représentent schématiquement en perspective une telle configuration dans laquelle l'instrument optique, qui peut être l'instrument optique 31 de la figure 4, est disposé transversalement à la direction de défilement, et donc à l'axe de rotation du miroir. L'axe optique de l'instrument 31 intercepte directement l'une des surfaces réfléchissantes du miroir; aucun miroir de renvoi n'est donc ici nécessaire.

On comprend, par analogie à ce qui a été exposé à propos de la figure 4, que, selon que l'axe optique de l'instrument optique 31 est intercepté par l'une ou l'autre des surfaces réfléchissantes du miroir, l'axe de visée du système optique global formé de l'instrument 31 et de ce miroir 1 va être dirigé vers l'avant (cas de la figure 7A) ou vers l'arrière (cas de la figure 7B).

Toutefois, compte tenu de la configuration dissymétrique de l'ensemble du système optique par rapport à un plan vertical contenant l'axe de rotation du miroir, la trace au sol de l'axe de visée, qu'il soit dirigé vers l'avant ou vers l'arrière, dans un repère se déplaçant le long du sol en synchronisme avec la plate-forme, n'est pas symétrique par rapport à un axe longitudinal parallèle à la direction de défilement.

En effet, à la différence du cas des figures 4 et 5, lorsque l'axe optique est situé dans un plan vertical contenant l'axe de rotation, le miroir rotatif 1 présente deux inclinaisons par rapport à l'axe de rotation de ce miroir: une inclinaison fixe correspondant à l'angle α et/ou β mentionnée aux figures 1 à 3, mais aussi une inclinaison d'environ 45° en direction de l'instrument optique. La trace au sol de l'axe de visée avant (respectivement arrière) sera donc, par rapport à ce plan vertical contenant l'axe de rotation, plus en avance (respectivement en arrière) lorsqu'elle sera du même côté de l'instrument optique, que dans le cas où cette trace sera du même côté opposé à cet instrument optique. Dans le cas présent, l'instrument est à gauche.

Cela peut se vérifier sur le graphique de la figure 8 avec les mêmes hypothèses qu'à la figure 6 en ce qui concerne l'altitude du satellite et l'inclinaison du miroir. On observe des variations d'adresse longitudinale pouvant atteindre et dépasser 100 km lorsque la trace parcourt transversalement une distance d'environ 1000 km.

Dans la mesure où cette dissymétrie est parfaitement prévisible elle peut aisément être compensée par un traitement approprié au sein de l'instrument optique ou des circuits de traitement associés.

Quel que soit le mode de réalisation considéré, on appréciera la simplicité de conception du système optique de l'invention. Les caractéristiques de ce système sont notamment :
- les angles des axes de visée avant et/ou arrière (voir nadir) sont figés,
- l'angle sous lequel est vu l'objet à observer dans un plan contenant la normale à l'objet et la direction de défilement (angle vers l'avant ou angle vers l'arrière) est variable en fonction de la position angulaire latérale d'observation dans le cas des visées avant ou arrière ; en d'autres termes, on peut jouer sur ces angles par modification de l'orientation de l'axe optique de l'instrument optique par rapport à l'axe de rotation du miroir par rapport à un plan contenant cet axe et la normale à l'objet, et par rapport à un plan perpendiculaire à la direction de défilement,
- l'invention se prête particulièrement bien à la mise en oeuvre d'un instrument optique à détecteur unidirectionnel (type "push-broom" déjà cité) ; il peut être nécessaire, ainsi que cela est connu, de faire tourner ce détecteur dans le plan focal au fur et à mesure que l'inclinaison latérale de l'axe de visée augmente. Le miroir biface de l'invention sert alors au pointage. Mais l'invention se prête également à la mise en oeuvre d'un instrument à détecteur ponctuel, le miroir ayant alors une fonction de balayage. Un même miroir peut avoir les deux fonctions.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Système optique pour l'observation d'un objet selon une pluralité d'axes de visée, comportant un instrument optique (31) ayant un axe optique et un miroir rotatif adapté à intercepter un faisceau émis ou reçu par l'instrument selon cet axe optique, ce miroir rotatif ayant un axe de rotation (Z-Z) et comportant deux surfaces réfléchissantes (3, 4, 13, 14) disposées dos à dos en étant au moins approximativement perpendiculaires à un même plan contenant l'axe de rotation, l'une au moins des surfaces réfléchissantes ayant une inclinaison non nulle (α, β) par rapport à cet axe de rotation, le système optique ayant des axes de visée différents selon que l'axe optique de l'instrument optique intercepte l'une ou l'autre des surfaces réfléchissantes.

2. Système optique d'observation selon la revendication 1, caractérisé en ce que lesdites surfaces réfléchissantes (3, 4) sont parallèles l'une à l'autre.

3. Système optique d'observation selon la revendication 1 ou la revendication 2, caractérisé en ce que les deux surfaces réfléchissantes sont deux faces d'une même plaque.

4. Système optique d'observation selon l'une quelconque des revendications 1 à 3, caractérisé en ce que chacune desdites surfaces réfléchissantes est au moins approximativement symétrique par rapport audit plan contenant l'axe de rotation.

5. Système optique d'observation selon l'une quelconque des revendications 1 à 4, caractérisé en ce qu'un miroir de renvoi (33) intercepte cet axe optique et le renvoie selon une direction qui intercepte au moins approximativement l'axe de rotation.

6. Système optique d'observation selon la revendication 5, caractérisé en ce que ladite direction est sensiblement perpendiculaire à l'axe de rotation.

7. Système optique d'observation selon la revendication 10 ou la revendication 6, caractérisé en ce que cet axe optique est au moins approximativement contenu dans un plan contenant l'axe de rotation.

8. Système optique d'observation selon l'une quelconque des revendications 1 à 4, caractérisé en ce que cet axe optique intercepte au moins approximativement l'axe de rotation.

9. Système optique d'observation selon la revendication 8, caractérisé en ce que cet axe optique est au moins approximativement perpendiculaire à l'axe de rotation.

10. Système d'observation à balayage comportant une plate-forme (31) mobile parallèlement à un objet à imager (S) suivant une direction de défilement (D), cette plate-forme portant un système optique d'observation conforme à l'une quelconque des revendications 1 à 9, l'axe de rotation (Z -Z) du miroir étant parallèle à la direction de défilement.

11. Système d'observation à balayage selon la revendication 10, caractérisé en ce qu'un miroir de renvoi (33) intercepte cet axe optique et le renvoie vers l'axe de rotation sensiblement à l'opposé de l'objet à imager (S).

12. Système d'observation à balayage selon la revendication 10, caractérisé en ce que cet axe optique intercepte au moins approximativement l'axe de rotation, l'instrument optique étant situé à l'écart transversalement par rapport à un plan contenant l'axe de rotation et une direction destinée à s'étendre depuis la plate-forme vers l'objet à imager.

13. Système d'observation à balayage selon l'une quelconque des revendications 10 à 12, caractérisé en ce que la plate-forme est embarquée sur un véhicule aérien ou spatial et l'objet à imager est une zone de sol.
